(19) Europäisches Patentamt
European Patent Office
Office européen des brevets

(11) **EP 1 435 130 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(21) Anmeldenummer: 02743183.2

(22) Anmeldetag: **13.06.2002**

(51) Int Cl.⁷: **H02P 3/04**

(86) Internationale Anmeldenummer:
**PCT/EP2002/006475**

(87) Internationale Veröffentlichungsnummer:
**WO 2003/032479 (17.04.2003 Gazette 2003/16)**

(54) **VERFAHREN UND VORRICHTUNG ZUR ÜBERWACHUNG DES BETRIEBSZUSTANDS EINER ELEKTROMAGNETISCH BETÄTIGBAREN BREMSE**

METHOD AND DEVICE FOR MONITORING THE OPERATING STATE OF A BRAKE THAT CAN BE ACTUATED ELECTROMAGNETICALLY

PROCEDE ET DISPOSITIF POUR SURVEILLER L'ETAT DE FONCTIONNEMENT D'UN FREIN A ACTIONNEMENT ELECTROMAGNETIQUE

(84) Benannte Vertragsstaaten:
**AT BE CH CY DE DK ES FI FR GB GR IE IT LI LU MC NL PT SE TR**

(30) Priorität: **09.10.2001 DE 10149604**

(43) Veröffentlichungstag der Anmeldung:
**07.07.2004 Patentblatt 2004/28**

(73) Patentinhaber: **Pintsch Bamag GmbH 46537 Dinslaken (DE)**

(72) Erfinder: **CHMELA, Heinz 46499 Hamminkeln (DE)**

(74) Vertreter: **Grünecker, Kinkeldey, Stockmair & Schwanhäusser Anwaltssozietät Maximilianstrasse 58 80538 München (DE)**

(56) Entgegenhaltungen:
DE-A- 19 751 445      DE-B- 2 348 919
FR-A- 2 806 674       US-A- 4 600 865
US-A- 4 975 627       US-A- 5 245 501

**Beschreibung**

Die Erfindung betrifft ein Verfahren zum Überwachen des Betriebszustandes einer Bremse, nach dem Oberbegriff von Patentanspruch 1.

Als zu überwachende Bremse kommt beispielsweise eine Elektromagnet-Federdruckbremse in Frage. Solche Bremsen werden zum Halten von Lasten oder als Sicherheitsbremsen verwendet, bei denen bei Stromfluss durch eine Erregerspule eine bewegliche Ankerscheibe einen mit einer Motorwelle kraftschlüssig verbundenen Reibbelagträger freigibt und damit die Bremse lüftet bzw. ausrückt. Im stromlosen Zustand der Spule wird die Bremse durch Federkraft eingerückt, indem die Ankerscheibe gegen den Reibbelagträger gedrückt wird. Der von der Ankerscheibe beim Aus- und Einrücken der Bremse zurückgelegte Weg wird als Bremsluft bezeichnet.

Eine Elektromagnet-Federdruckbremse ist in der Regel als Stillstandsbremse ausgelegt, d.h., dass der Motor das Lastmoment bei Stillstand der Motorwelle während des Ausrückens bzw. des Einrückens der Bremse übernimmt. Als Sicherheitsbremse muss sie lediglich in Notfällen, beispielsweise bei Spannungsausfall, die Last aus voller Drehzahl abbremsen. Eine derartige Notbremsung hat dann einen entsprechend großen Abrieb der Bremsbeläge zur Folge.

Der Verschleiß des Bremsbelages führt zu einer Vergrößerung des Luftspaltes der Bremse und dadurch zu einer Verringerung des erreichbaren Bremsmomentes. Für den Luftspalt bzw. die Bremsluft ist allerdings nur ein bestimmter maximaler Wert zulässig. Gleiches gilt auch für andere Arten von elektromagnetisch betätigten Bremsen, bei denen die Bremswirkung nicht notwendigerweise durch Federkraft erzeugt wird.

Um in Notfällen eine einwandfreie Funktion der Bremse sicherzustellen, muss ihr Zustand ständig überwacht werden können, ohne dass sie auseinandergebaut wird. Beispielsweise muss feststellbar sein, ob sich die Bremse im eingerückten Zustand oder im ausgerückten Zustand befindet und ob der Luftspalt noch im zulässigen Bereich liegt.

Aus dem Stand der Technik sind verschiedene Verfahren und Vorrichtungen zur Überwachung von Bremsen bekannt.

Beim am häufigsten eingesetzten Verfahren zur Positionsüberwachung der Ankerscheibe werden mechanische Mikro-Endschalter verwendet. Wegen der beengten Einbausituation innerhalb der Bremse und der zur präzisen Erfassung der Lage der Ankerscheibe notwendigen kleinen Schalthysteresen ist auf kleine Baumaße zu achten. Außerdem müssen die Mikro-Endschalter den in der Bremse auftretenden hohen Temperaturen, vor allem bei einer Notbremsung, gewachsen sein.

Zur Überwachung des minimalen Luftspalts bzw. des eingerückten und ausgerückten Zustandes der Bremse und zur Überwachung der Größe des Luftspalts ist jeweils ein eigener Mikro-Endschalter erforderlich. Die Schalter müssen so befestigt und ausgelegt sein, dass sich ihre Lage relativ zur Ankerscheibe durch die im Betrieb der Bremse auftretenden Erschütterungen auch auf Dauer nicht verstellt. Zum Ausgleich der mechanischen Toleranzen sind die Schaltpunkte sehr genau zu justieren, so dass die Justierarbeiten aufwendig und zeitraubend sind. Schließlich müssen für den elektrischen Anschluss der Mikro-Endschalter zusätzliche Leitungen in der Bremse verlegt werden. Ein weiteres Problem ist die Beeinträchtigung des Kontaktes der Mikro-Endschalter durch Umwelteinflüsse und Verschleiß, insbesondere durch den Abrieb innerhalb der Bremse und durch Schwitzwasser.

Diese Kontaktschwierigkeiten können beseitigt werden, wenn anstelle der mechanischen Mikro-Endschalter induktive Näherungsschalter verwendet werden. Solche induktiven Näherungsschalter haben jedoch den Nachteil, dass sie zur Verwendung innerhalb einer elektromagnetisch betätigten Bremse eine entsprechende elektromagnetische Verträglichkeit aufweisen müssen. Ein weiteres Problem der induktiven Näherungsschalter liegt in der Abhängigkeit des Schaltpunkts von der Umgebungstemperatur. Außerdem weisen sie größere Abmessungen als Mikro-Endschalter auf und sind daher nicht in allen Bremsen gleichermaßen einbaubar.

Zur Überwachung von Bremsen können auch Stromrelais eingesetzt werden. Stromrelais haben allerdings den Nachteil, dass die von ihnen erfassten Größen den Betriebszustand der Bremse nur sehr ungenau wiedergeben. Die in Bremsen herkömmlicherweise verwendeten Stromrelais schalten, wenn der Momentanwert des durch die Spule fließenden Stromes einen vorbestimmten Wert überschreitet. Allerdings bedeutet ein Stromfluss von vorbestimmter Höhe in der Praxis nicht, dass die Bremse auch tatsächlich eingerückt oder ausgerückt ist. Wird z.B. der Luftspalt zu groß, so kann die magnetische Kraft der Spule auch bei starken Erregerströmen nicht mehr ausreichen, um die Ankerscheibe gegen die Federkraft zu bewegen. In diesem Fall signalisiert das Stromrelais fehlerhaft ein Einrücken der Bremse, das nicht stattgefunden hat. Im umgekehrten Fall kann beim Abschalten des Spulenstroms die Ankerscheibe in ihrer Lage hängenbleiben, was durch ein Stromrelais ebenfalls nicht erkannt wird.

Schließlich werden Bremsen im Stand der Technik auch elektronisch überwacht. So ist in der US-A-4975627 eine Antriebssteuerung für einen Fahrstuhl beschrieben, bei der die Betätigung einer Bremse an einer Rolle überwacht wird. Mittels eines Differenziators wird die Spannung an der Bremsspule zeitlich abgeleitet. Der Eingriff der Bremse zeichnet sich durch einen starken Aufschlag in der zeitlichen Ableitung der Spulenspannung ab, da sich die Induktivität der Bremsspule ändert. Die Ableitung der Spulenspannung wird mittels eines Komperators mit einem Referenzwert verglichen und ein Zustandssignal wird ausgegeben, wenn der Referenzwert überschritten ist. In der Praxis ist das Verfahren der US-A-4975627 nicht bei Bremsen einzusetzen, die mit Wechselspannung betrieben werden.

In der DE-A-19751445 ist eine Einrichtung beschrieben, mit der eine Lüftspielnachstellung realisiert wird. Zur Bestimmung des Soll-Lüftspieles einer Bremse wird der elektrische Motorstrom, der zum momentanen Motordrehmoment proportional ist, verwendet. Zusätzlich kann dazu auch die zeitliche Ableitung des Motorstroms verwendet werden. Über den Anstieg des Motordrehmoments und damit den Anstieg des Motorstroms wird dann das Lüftspiel bestimmt. Dieses Verfahren ist für die Überwachung des Bremsenzustands aufgrund der indirekten Messmethode sehr unzuverlässig.

In der US-A-5245501 ist ein Verfahren zur Steuerung der Ankerbewegung eines elektronischen Schaltelements mit einer Erregerspule beschrieben. Dieses Verfahren findet zur Überwachung von Einspritzventilen bei Verbrennungskraftmaschinen Anwendung, so dass der Einspritzzeitpunkt und die Einspritzdauer optimal festgestellt werden können.

Zusammengefasst gibt es also im Stand der Technik keine zufriedenstellenden und konstruktiv einfachen Lösungen, mit denen der Betriebszustand einer Bremse mit ausreichender Sicherheit erfasst wird.

Angesichts des Standes der Technik liegt der Erfindung daher die Aufgabe zugrunde, das eingangs genannte Verfahren zur Überwachung einer Bremse so zu verbessern, dass der Betriebszustand mit einer gegenüber dem Stand der Technik erhöhten Sicherheit ohne zusätzlichen konstruktiven Aufwand erfasst wird.

Diese Aufgabe wird für das eingangs genannte Verfahren dadurch gelöst, dass das Zustandssignal in Abhängigkeit vom Zeitverlauf der zeitlichen Ableitung des Spulenstroms ausgegeben wird, und dass zur Auswertung der zeitlichen Ableitung des Spulenstroms eine die zeitlich Ableitung des Spulenstroms wenigstens annähernde Referenzgröße gebildet wird.

Diese erfindungsgemäße Lösung ist einfach und hat den Vorteil, dass bei der Bremse keine zusätzlichen Baumaßnahmen durchgeführt werden müssen, da die Auswertung der zeitlichen Ableitung des Spulenstroms über die bereits bei der Bremse vorhandene Versorgungsleitung der Spule stattfinden kann. Sie hat weiterhin den Vorteil, dass sich aus der zeitlichen Ableitung des Verlaufs des Spulenstromes bei Änderung des Spulenstroms und einer damit einhergehenden Änderung des Betriebszustandes der Bremse eindeutige und sichere Informationen über den tatsächlichen Schaltzustand der Bremse und die Größe des Luftspaltes der Bremse gewinnen lassen.

Um die Sicherheit der Auswertung zu erhöhen, und um Störeinflüsse, die der Ableitung des Spulenstroms überlagert sind, zu verringern, wird zur Auswertung der zeitlichen Ableitung des Spulenstroms eine Referenzgröße gebildet, die der jeweiligen zeitlichen Ableitung wenigstens angenähert ist und diese repräsentiert.

Spule und Ankerscheibe bilden ein magnetisches System, bei dem sich die Induktivität der Spule in Abhängigkeit von der Lage der Ankerscheibe ändert. Bei einer Bewegung der Ankerscheibe im Magnetfeld der Spule in Richtung auf die Spule zu wird in der Spule eine Gegenspannung induziert, die den Spulenstrom für die Dauer der Bewegung der Ankerscheibe absinken lässt, bis die Ankerscheibe vollständig angezogen ist. Erst wenn die Ankerscheibe am Spulenkörper anschlägt und die Bewegung stoppt, steigt der Strom wieder an. Durch die Bewegung der Ankerscheibe ergibt sich eine Unstetigkeit im dynamischen Verlauf des Spulenstroms. Der Beginn der Bewegung der Ankerscheibe im Magnetfeld der Spule und das Anschlagen der Ankerscheibe am Spulenkörper kann sich insbesondere in zwei Unstetigkeitsstellen niederschlagen.

In einer besonders vorteilhaften Ausgestaltung des Verfahrens wird mit Hilfe der Auswertung der dynamischen Verläufe von Spulenstrom und Spulenspannung und/oder deren zeitlichen Ableitungen die Unstetigkeit im Spulenstrom aufgefunden.

Die Referenzgröße kann beispielsweise durch Filtern des Spulenstromes vor dem Ableiten oder auch durch Filtern der zeitlichen Ableitung des Spulenstroms erzeugt werden. Eine Filterung kann insbesondere bei mit gleichgerichteter Wechselspannung betriebenen Bremsen durchgeführt werden, um die Wechselstromanteile zu entfernen. In diesem Fall kann als Filter ein Bandpassfilter verwendet werden, dessen Sperrfrequenzen die Wechselstromfrequenz umfassen.

Auch die Referenzgröße selbst kann gemäß einer vorteilhaften Ausgestaltung gefiltert werden, um eine einfachere Auswertung mit erhöhtem Störabstand zu ermöglichen.

In einer besonders bevorzugten Variante einer Referenzgröße wird diese als eine Treppenfunktion gebildet, deren Verlauf an die zeitliche Ableitung des Spulenstroms angenähert wird. Eine Treppenfunktion lässt sich mit besonders einfachen und kostengünstigen elektronischen Bauelementen realisieren und weist eine steil abfallende oder ansteigende Flanke auf, an die sich ein nahezu konstanter Verlauf anschließt.

Die Treppenfunktion kann beispielsweise nach dem Schleppzeiger-Prinzip erzeugt werden, wonach eine Referenzspannung während einer vorbestimmten Ladezeitkonstante auf die Höhe der anzunähemden Funktion gebracht wird und über einen vorbestimmten Zeitraum auf diesem Wert gehalten wird.

Insgesamt ist es insbesondere durch die Bildung der Referenzgröße möglich, das erfindungsgemäße Verfahren und die erfindungsgemäße Überwachungseinrichtung unabhängig vom speziell verwendeten Bremsentyp einzusetzen, da der Störabstand und die Fehlersicherheit ausreichend groß sind.

Bei Bremsen, die mit gleichgerichteter Wechselspannung betrieben werden, kann die Bildung der Treppenfunktion mit dem Wechselstromanteil synchronisiert sein. Insbesondere kann der Anstieg der Treppenfunktion mit den Maxima der Wechselstromperiode so synchronisiert sein, dass die Treppenfunktion in etwa auf den jeweiligen Maximalwert oder Minimalwert des anzunähernden Signals steigt. Durch eine derartige Synchronisation wird eine besonders genaue Wiedergabe des zu überwachenden Signals und eine besonders starke Unterdrückung des Wechselstrom- bzw. Wechselspannungsanteils im Signal erreicht.

Eine nochmalige Erhöhung des Störabstands und damit eine nochmalige Verbesserung in der Sicherheit der Auswertung lässt sich erreichen, wenn basierend auf dem ersten Referenzsignal ein zweites Referenzsignal gebildet wird. Ein solches Referenzsignal kann beispielsweise durch Mittelung des ersten Referenzsignals, wobei unter einer Mittelung auch eine Filterung zu verstehen ist, realisiert werden. Insbesondere kann das zweite Referenzsignal ebenfalls in Form einer Treppenfunktion gebildet werden.

Bei Verwendung einer Referenzgröße anstelle der ursprünglichen Größen wie der Spulenspannung, dem Spulenstrom und/oder der zeitlichen Ableitung von Spulenspannung und/oder Spulenstrom, wird der Betriebszustand der Bremse wegen des höheren Störabstandes mittels der diese Größe repräsentierenden Referenzgröße bestimmt.

Bei dem erfindungsgemäßen Verfahren und der erfindungsgemäßen Überwachungsvorrichtung können wenigstens drei Zustandssignale in beliebiger Kombination, auch einzeln, erzeugt werden. Ein erstes Zustandssignal kann beispielsweise das tatsächliche Einrücken der Bremse anzeigen. Ein zweites Zustandssignal kann beispielsweise das erfolgreiche Ausrücken der Bremse signalisieren und ein drittes Zustandssignal kann beispielsweise das Überschreiten des maximal zulässigen Luftspaltes in der Bremse anzeigen.

Für die Ausgabe des erstes Zustandssignals wird gemäß einer Weiterbildung der Erfindung die zeitliche Ableitung des Spulenstroms überwacht. Das erste Zustandssignal wird ausgegeben, wenn die zeitliche Ableitung des Spulenstroms einen vorbestimmten, vorzugsweise positiven, Schwellenwert überschreitet. Das Überschreiten dieses Schwellenwerts kann als einziges oder als ein zusätzliches Kriterium für die Ausgabe des ersten Zustandssignals verwendet werden.

Ebenfalls als ein erstes oder, in einer Variante als einziges Kriterium, für die Ausgabe des ersten Zustandssignals kann das Unterschreiten eines vorbestimmten negativen Schwellenwerts der zeitlichen Ableitung des Spulenstroms verwendet werden. Zur Erhöhung der Überwachungssicherheit können beide Kriterien gemeinsam angewandt werden. Dann muss zunächst das Überschreiten des ersten Schwellenwertes und anschließend das Unterschreiten des zweiten Schwellenwertes durch die zeitliche Ableitung des Schwellenwertes überprüft werden.

Eine größere Flexibilität in der Anwendung des Verfahrens ist, wie oben bereits erwähnt, dann gewährleistet, wenn anstelle der zeitlichen Ableitungen eine Referenzgröße verwendet wird, in der Störeinflüsse verringert sind. Diese Referenzgröße kann die oben erwähnte Treppenfunktion sein.

Insbesondere bei gleichgerichteter Wechselspannung kann das erste Zustandssignal dann ausgegeben werden, wenn gemäß einer Weiterbildung des Verfahrens die Änderung der Treppenfunktion zwischen zwei aufeinander folgenden Werten einen vorbestimmten Schwellenwert überschreitet.

Gemäß einer weiteren, als separates oder zusätzliches Kriterium einzusetzenden Bedingung kann das erste Zustandssignal dann ausgegeben werden, wenn zwischen dem durch die Treppenfunktion angenäherten Signal und der Treppenfunktion selber eine Differenz liegt, die größer als ein vorbestimmter Schwellenwert ist.

Im Folgenden werden die Bedingungen beschrieben, die in vorteilhaften Weiterbildungen einzeln oder in beliebiger Kombination erfüllt sein müssen, damit das zweite Zustandssignal ausgegeben wird:
Wird die Energiezufuhr zur Spule unterbrochen, so wird die in der Spule gespeicherte Energie frei. Die Strom-/Spannungsverläufe an der Spule hängen davon ab, welche elektronischen Bauelemente verwendet werden, um die in der Spule gespeicherte Energie bei deren Abschalten zu dissipieren. Beispiele für solche Bauelemente sind Varistoren, beispielsweise aus Siliziumkarbid, oder aktive Absorberschaltungen sowie aktive Spannungsbegrenzer.

Als erstes Kriterium für die Ausgabe des zweiten Zustandssignals gemäß einer vorteilhaften Ausgestaltung des Verfahrens wird das Absinken der Spulenspannung unter einen vorbestimmten Schwellenwert und/oder das Absinken des Spulenstroms unter einen vorbestimmten Schwellenwert verwendet. Dieses Kriterium entspricht dem Abschalten des Spulenstroms.

Wird ein Varistor mit einem relativ hohen differenziellen Widerstand und einer relativ weichen Spannungs-Charakteristik verwendet, so können beim Abschalten des Spulenstroms relativ hohe negative Spannungsspitzen auftreten. Gleichzeitig nimmt der Spulenstrom entsprechend der Varistor-Charakteristik stark ab, bis sich die Ankerscheibe vom Spulenkörper wegbewegt. Durch die Bewegung der Ankerscheibe im nach wie vor vorhandenen Magnetfeld der Spule wird ein Spulenstrom induziert, so dass es im Varistor zu einem erneuten Spannungsanstieg kommt, bis der Bewegungsvorgang abgeschlossen ist. Dann klingen Strom und Spannung rasch bis auf Null ab.

Bei Verwendung eines Varistors oder einer Varistor-ähnlichen Schaltung zur Absorption der in der Bremse gespeicherten Energie kann also als ein Kriterium für das Ausgeben des zweiten Zustandssignals gemäß einer weiteren vorteilhaften Ausgestaltung das Auftreten von zwei aufeinanderfolgenden negativen Spitzen in der Spulenspannung nach dem Abschalten des Spulenstroms verwendet werden. Die zweite negative Spulenspannungsspitze bezeichnet dabei das Abfallen der Ankerscheibe.

Als ein Kriterium zur Bestimmung einer für die Bewegung der Ankerscheibe typischen Spannungsspitze in der Spulenspannung kann gemäß einer weiteren vorteilhaften Ausgestaltung das gleichzeitige Vorhandensein einer einen vorbestimmten Schwellenwert unterschreitenden negativen Spulenspannung und einer einen vorbestimmten Schwellenwert überschreitenden zeitlichen Ableitung der Spulenspannung verwendet werden.

Als ein weiteres Kriterium, durch das die zweite Spannungsspitze zuverlässig erfasst werden kann und Fehler bei der Ausgabe des zweiten Zustandssignals verringert werden können, kann gemäß einer vorteilhaften Weiterbildung des Verfahrens das Unterschreiten eines vorbestimmten negativen Schwellenwerts durch den Wert der zeitlichen Ableitung der Spulenspannung verwendet werden. Dieses Kriterium kann insbesondere erst ausgewertet werden, wenn der vorbestimmte Schwellenwert der negativen Spulenspannung unterschritten und/oder ein anderer vorbestimmter Schwellenwert von der zeitlichen Ableitung der Spulenspannung überschritten wurde.

Werden dagegen aktive Spannungsbegrenzer verwendet, so wird die Spulenspannung im wesentlichen auf einen durch die aktive Spannungsbegrenzung vorgegebenen Wert gehalten. Eine Zustandsüberwachung kann bei aktiven Spannungsbegrenzern daher im wesentlichen über eine Überwachung des dynamischen Verlaufs des Spulenstroms stattfinden.

Gemäß einer Weiterbildung des erfindungsgemäßen Verfahrens kann bei der Verwendung eines aktiven Spannungsbegrenzers die Größe der Spulenspannung nach dem Abschalten der Speisespannung überwacht werden: Liegt die Spulenspannung im Bereich des durch die aktive Spannungsbegrenzung eingestellten Wertes, so ist ein erstes Kriterium für das Ausrücken der Bremse erfüllt.

Die Bewegung der Ankerscheibe wird gemäß einer Weiterbildung des erfindungsgemäßen Verfahrens durch eine Überwachung der zeitlichen Ableitung des Spulenstroms erfasst: überschreitet die zeitliche Ableitung des Spulenstroms bei abgeschalteter Speisespannung einen vorgegebenen positiven Grenzwert, so wird das zweite Zustandssignal ausgegeben.

In einer weiteren vorteilhaften Ausgestaltung ist das Verfahren zur Ausgabe des zweiten Zustandssignals sowohl für Varistoren als auch für aktive Spannungsbegrenzer einsetzbar. Gemäß dieser Weiterbildung wird das zweite Zustandssignal gesetzt, wenn entweder die Ableitung des Spulenstroms einen vorbestimmten positiven Schwellenwert oder die Ableitung der Spulenspannung einen vorbestimmten negativen Schwellenwert oder die Summe aus dem positiven Wert der Ableitung des Spulenstromes und aus dem positiven Betrag des Wertes der Ableitung der Spulenspannung einen vorbestimmten Schwellenwert überschreitet, und wenn gleichzeitig die Spulenspannung einen vorbestimmten Schwellenwert, der vorzugsweise etwas über 0 V liegt, unterschritten hat und die Ableitung des Spulenstromes keinen negativen Wert aufweist.

Durch die Festlegung des Schwellenwertes auf eine Spannung nahe 0 V kann durch dasselbe Verfahren auch der Betriebszustand erfasst werden, bei dem bei einer mit gleichgerichteter Wechselspannung betriebenen Bremse eine Unterbrechung des Stromkreises auf der Wechselstromseite vor den Gleichrichtern auftritt. Bei diesem Störfall macht sich das Abfallen der Ankerscheibe nur durch eine positive Spitze im Verlauf der zeitlichen Ableitung des Spulenstromes bemerkbar.

Für die Ausgabe des dritten Zustandssignals wird der dynamische Verlauf von Spulenstrom und Spulenspannung und deren zeitlichen Ableitungen auf die folgenden Kriterien hin überwacht, die einzeln oder in beliebiger Kombination miteinander erfüllt sein können: Liegt bei einer Ausgestaltung der Spulenstrom über einem vorbestimmten Schwellenwert bzw. Anzugsstrom, bei dem sich die Ankerscheibe bei normalem Luftspalt in Bewegung setzt, und wird in der zeitlichen Ableitung des Spulenstroms keine Unstetigkeitsstelle erfasst, so wird das dritte Zustandssignal ausgegeben. Der Schwellenwert wird durch eine Kodiervorrichtung der Bremse an den jeweiligen Bremsentyp angepasst.

Die Auswertung des dynamischen Verlaufs des Spulenstromes und/oder der Spulenspannung kann auf digitalem oder analogem Wege stattfinden.

Gemäß einer vorteilhaften Weiterbildung des Verfahrens kann vorgesehen sein, die Schwellenwerte zur Ausgabe des ersten Zustandssignals automatisch in Abhängigkeit vom Ergebnis der Auswertung der dynamischen Verläufe von Spulenstrom und Spulenspannung festzulegen, während das Auswerteverfahren durchgeführt wird. Dies kann beispielsweise dadurch geschehen, dass ausgehend von einem niedrigsten Grundwert die Schwellenwerte abhängig vom Momentanwert des gemittelten Spulenstromes erhöht wird. Diese automatische Anpassung des Überwachungsverfahrens hat den Vorteil, dass es universell bei einer Vielzahl von Bremsentypen verwendet werden kann.

Die Erfindung betrifft außerdem eine Überwachungsvorrichtung für eine Bremse mit einer Spule, wobei die Überwachungsvorrichtung im Betrieb mit einer Versorgungsleitung der Spule elektrisch verbunden ist und eine Auswerteeinheit aufweist, über die wenigstens ein dem Betriebszustand der Bremse repräsentierendes Zustandssignal ausgebbar ist.

Die Erfindung betrifft außerdem eine Bremsvorrichtung mit einer elektromagnetisch betätigbaren Bremse und der Überwachungsvorrichtung.

Die erfindungsgemäße Aufgabe wird auch durch eine Überwachungsvorrichtung der oben genannten Art gelöst, die eine mit der Auswerteeinheit verbundene Berechnungseinheit aufweist, durch die im Betrieb ein die zeitliche Ableitung des Spulenstromes wenigstens annähernde Referenzgröße erzeugt und an die Auswerteeinheit geleitet ist.

Gemäß einer vorteilhaften Ausgestaltung der Überwachungsvorrichtung kann eine Kodiererfassungseinheit vorgesehen sein, die mit einer der Bremse zugeordneten Kodiereinheit zusammenwirkt. Über die durch die Kodiereinheit und die Kodiererfassungseinheit erhaltenen Informationen können die bei der Auswertung des dynamischen Verlaufs des Spulenstromes und/oder der Spulenspannung verwendeten Schwellenwerte automatisch auf den verwendeten Bremsentyp eingestellt werden.

Die Überwachungsvorrichtung kann vorteilhaft außerhalb der Bremse angeordnet sein, beispielsweise in einem Schaltschrank. Der Vorteil der erfindungsgemäßen Überwachungsvorrichtung bzw. des erfindungsgemäßen Verfahrens liegt darin, dass keine zusätzlichen elektrischen Anschlüsse benötigt werden, sondern lediglich die Versorgungsleitungen der Spule verwendet werden.

Im Folgenden wird die Erfindung anhand von Ausführungsbeispielen mit Bezug auf die Zeichnungen genauer erläutert.

Es zeigen:

Fig. 1    eine Bremse, bei der das erfindungsgemäße Überwachungsverfahren und die erfindungsgemäße Überwachungsvorrichtung verwendet werden;

Fig. 2    den schematischen Aufbau einer erfindungsgemäßen Überwachungsvorrichtung;

Fig. 3    einen typischen Verlauf von Spulenstrom und Spulenspannung zur Bestimmung des ausgerückten Zustandes der Bremse gemäß einem ersten Ausführungsbeispiel;

Fig. 4    ein Beispiel eines schematischen Verlaufs des Spulenstroms bei Betrieb mit gleichgerichteter Wechselspannung (Einweggleichrichtung), zur Auswertung gemäß einem weiteren Ausführungsbeispiel;

Fig. 5    ein Beispiel des schematischen Verlaufs der zeitlichen Abteilung des Spulenstroms unter Bildung einer Referenzgröße zur Auswertung gemäß einem weiteren Ausführungsbeispiel;

Fig. 6    die Bildung einer zweiten Referenzgröße aus der ersten Referenzgröße;

Fig. 7    den Verlauf des Spulenstroms, der Spulenspannung und deren zeitlichen Ableitungen zur Bestimmung des ausgerückten Zustandes bei einer Bremse mit Varistor gemäß einem weiteren Ausführungsbeispiel;

Fig. 8    den Verlauf des Spulenstroms, der Spulenspannung und deren zeitlichen Ableitungen zur Bestimmung des ausgerückten Zustandes einer Bremse mit aktiver Spannungsbegrenzung gemäß einem weiteren Ausführungsbeispiel;

Fig. 9    den zur Ausgabe eines dritten Zustandsignals gemäß einem weiteren Ausführungsbeispiel ausgewerteten Signalverlauf.

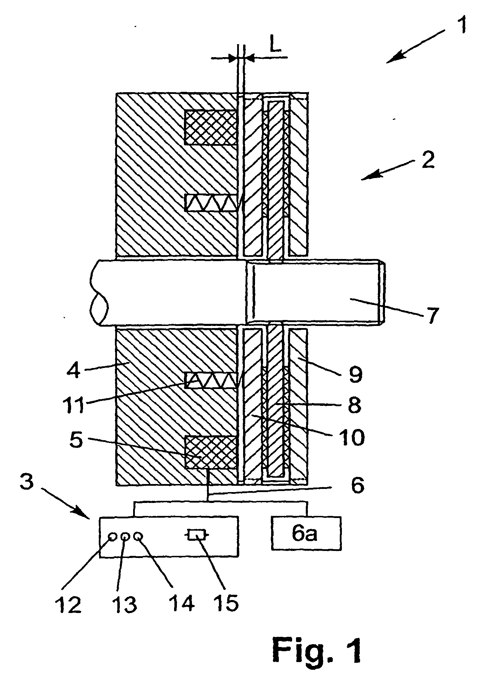

Zunächst wird der Aufbau einer Bremsvorrichtung 1 anhand der Fig. 1 beschrieben.

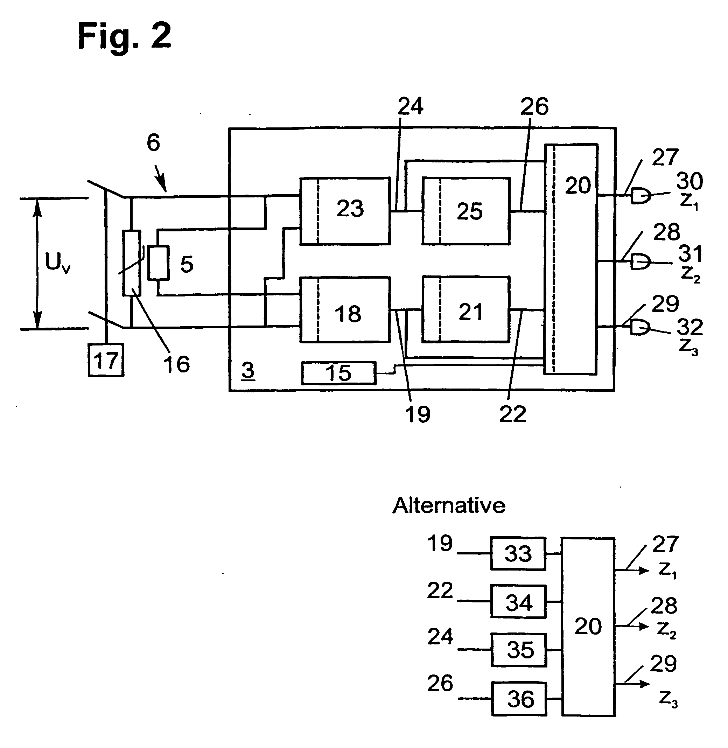

Die Bremsvorrichtung 1 weist eine Bremse 2 und eine Überwachungsvorrichtung 3 auf. Die Überwachungsvorrichtung wird nachfolgend mit Bezug auf die Fig. 2 genauer beschrieben.

Die Bremse 2 weist eine Sockelplatte bzw. einen Spulenkörper 4 auf, in der eine Spule 5 angeordnet ist. Die Spule 5 wird über eine Versorgungsleitung 6 mit elektrischer Energie durch eine Versorgungs- und Betätigungseinrichtung 6a versorgt. Durch die Sockelplatte 4 ist eine Motorwelle 7 geführt, die drehstarr mit einer Reibbelagscheibe 8 verbunden ist. Die Reibbelagscheibe 8 ist auf der Motorwelle 7 in deren Längsrichtung hin- und herbeweglich, beispielsweise durch Längsverzahnungen, geführt.

Die Reibbelagscheibe 8 ist zwischen einer in Längsrichtung der Motorwelle 7 festen Bremsscheibe 9 und einer in Längsrichtung der Motorwelle 7 beweglichen Ankerscheibe 10 angeordnet. Die starre Bremsscheibe 9 und die Ankerscheibe 10 sind mit der Sockelplatte 4 drehstarr verbunden.

Durch Federn 11 wird die Ankerscheibe 10 bei ausgeschalteter Spule 5 gegen die feste Bremsscheibe 9 gedrückt, so dass die dazwischenliegende Reibbelagscheibe eingeklemmt wird. Aufgrund der beim Bremsvorgang auftretenden Relativbewegung zwischen der mit der Motorwelle 7 gekoppelten Reibbelagscheibe 8 und der mit der Sockelplatte 4 verbundenen Ankerscheibe 10 sowie der starren Bremsscheibe 9 wird ein Bremsmoment erzeugt.

Beim Betätigen des aus der Sockelplatte 4 und der Spule 5 gebildeten Elektromagnetes 5 bewegt sich die Ankerscheibe 10 in Richtung der Sockelplatte 4 gegen die Wirkung der Federn 11, bis sie an der Sockelplatte 4 anliegt. Dadurch wird die Bremse ausgerückt. Der Weg, um den sich die Ankerscheibe bewegen kann, wird als Luftspalt L der Bremse oder als Bremsluft bezeichnet. Bei ausgerückter Bremse wird nahezu kein Reibmoment durch die Relativbewegung zwischen Reibbelagscheibe 8 und starrer Bremsscheibe 9 bzw. Ankerscheibe 10 erzeugt.

Die Überwachungsvorrichtung 3 ist außerhalb der Bremse 2 vorzugsweise in einem separaten Schaltschrank angeordnet, in dem auch die Versorgung der Spule 5 der Bremsvorrichtung 1 aufgenommen ist.

Durch die Überwachungsvorrichtung 3 werden die dynamischen Verläufe des an der Versorgungsleitung 6 anliegenden Spulenstroms und der Spulenspannung überwacht und Zustandssignale $z_1$, $z_2$, $z_3$ ausgegeben, die den Betriebszustand der Bremse repräsentieren.

Die Zustandssignale können beispielsweise durch das Anschalten von Leuchtmitteln 12, 13, 14, beispielsweise LEDs, an der Überwachungsvorrichtung ausgegeben werden. Als Zustandsgrößen können der tatsächlich erfolgte ausgerückte Zustand, der tatsächlich erfolgte eingerückte Zustand sowie das Überschreiten einer maximalen Bremsluft L angegeben werden. Die Zustandssignale können einzeln oder in beliebiger Kombination je nach Ausgestaltung der Überwachungsvorrichtung ausgegeben werden.

Alternativ können die Zustandssignale $z_1$, $z_2$, $z_3$ auch an ein oder mehrere Relais ausgegeben werden. Beispielsweise können die Zustandssignale $z_1$ und $z_2$ so miteinander verknüpft sein, dass ein Schaltelement oder ein Relais bei Vorliegen von $z_1$ in einem ersten und bei Vorlegen von $z_2$ in einem zweiten Schaltzustand überführt wird.

Über eine Kodiervorrichtung 15 der Überwachungsvorrichtung können der Bremsentyp und damit bei Bedarf bestimmte Schwellenwerte, die beim erfindungsgemäßen Verfahren verwendet werden, eingestellt werden. Beim Ausführungsbeispiel der Fig. 1 sind bei der Kodiervorrichtung 15 acht DIP-Kodierschalter vorgesehen, mit denen manuell vor Inbetriebnahme die zur angeschlossenen Bremse passenden Parameter eingestellt werden.

Der Aufbau der Überwachungsvorrichtung ist schematisch in Fig. 2 dargestellt.

Beim Ausführungsbeispiel der Fig. 2 ist parallel zur Spule 5 ein Varistor 16 geschaltet. Die Versorgungsspannung Uv für die Spule 5 wird über ein Schütz 17 ein- und ausgeschaltet. Wenn das Schütz 17 abgeschaltet wird, fließt der Spulenstrom durch den Varistor weiter, bis er auf Null abgeklungen ist.

Die Überwachungsvorrichtung 3 weist eine Strommesseinrichtung 18 auf, durch die der dynamische Verlauf des Spulenstroms i über eine Leitung 19 als Signal zu einer Auswerteeinheit 20 ausgegeben wird. Aus dem dynamischen Verlauf des Stromes berechnet ferner eine der Strommesseinrichtung 18 nachgeschaltete Einrichtung 21 die zeitliche Ableitung di/dt des Spulenstroms und gibt diese als Ergebnis über eine Leitung 22 an die Auswerteeinheit 20 weiter.

Der dynamische Verlauf der Spulenspannung u wird über eine Spannungsmesseinrichtung 23 überwacht und über eine Leitung 24 an die Auswerteeinheit 20 weitergeleitet. Der Spannungsmesseinrichtung 23 ist eine Einrichtung 25 nachgeschaltet, durch die die zeitliche Ableitung du/dt der Spulenspannung über eine Leitung 26 an die Auswerteeinheit 20 ausgegeben werden.

Die Auswerteeinheit 20 weist Leitungen 27, 28, 29 auf, über die Zustandssignale ausgegeben werden. Im Ausführungsbeispiel der Fig. 2 werden die Zustandssignale dazu verwendet, entsprechende LEDs 30, 31, 32 zu betätigen. Alternativ können die Zustandssignale auch zur Weiterverarbeitung an nachgeschalteten Geräten ausgegeben werden.

In Fig. 2 ist ferner als "Alternative" eine Variante der Überwachungsvorrichtung 3 dargestellt, bei der jeweils Einrichtungen 33, 34, 35, 36 vorgesehen sind, durch die eine Referenzgröße der jeweils über die entsprechende Leitung 19, 20, 21, 22 geleiteten Spannungs- oder Stromgröße gebildet wird.

In den Einrichtungen 33 - 36, die einzeln oder in beliebiger Kombination in der Überwachungsvorrichtung 3 vorgesehen sein können, wird eine Treppenfunktion erzeugt, die als Annäherung zum Spulenstrom i, zur Spulenspannung u und zur zeitlichen Ableitung des Spulenstroms di/dt, und/oder der Spulenspannung, du/dt, dient.

Die Spannungsmesseinrichtung 23 und die Strommesseinrichtung 18 sowie die Einrichtungen 21, 25 können ferner Bandpassfilter beinhalten, mit denen energiereiche Störfrequenzen herausgefiltert werden. In Fig. 2 sind die Filtereinheiten schematisch durch gestrichelte Linien im Eingangsbereich der jeweiligen Vorrichtung dargestellt. Zusätzlich zu den Bandpassfiltern können auch Hochpass- und Tiefpassfilter verwendet werden. Durch das Filtern kann der Störabstand erhöht und damit die Auswertung der von der Überwachungseinrichtung verwendeten Geräten verringert werden.

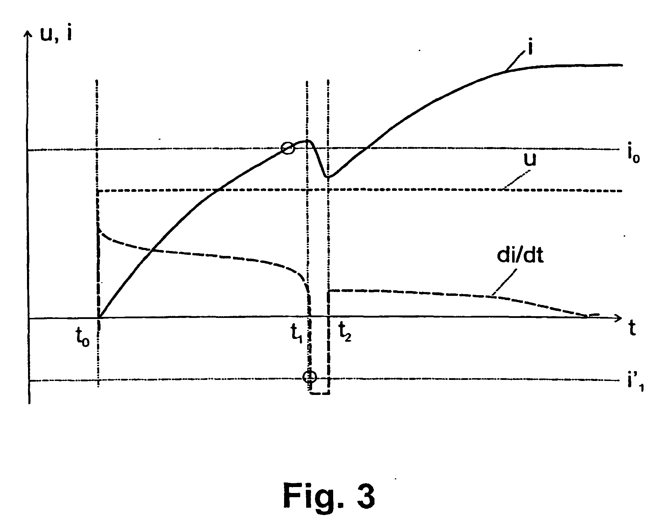

Aufgrund der Fig. 3 wird nun ein erstes Ausführungsbeispiel beschrieben, wie mittels der erfindungsgemäßen Überwachungsvorrichtung der Ausrückvorgang der Bremse bei Aktivieren der Spule 5 und Anziehen der Ankerscheibe 10 überwacht wird. Als Beispiel wird dabei eine mit Gleichspannung betriebene Bremse verwendet.

In der Fig. 3 ist der Verlauf der Spulenspannung u, des Spulenstromes i sowie der zeitlichen Ableitung des Spulenstromes di/dt beim Einschalten der Spule 5 (vgl. Fig. 1) qualitativ als Verlauf über die Zeit t schematisch dargestellt.

Zu einem Zeitpunkt $t_0$ wird die Energieversorgung der Spule 5 eingeschaltet, wie am Verlauf der Spulenspannung u in Fig. 3 zu erkennen ist. Der Spulenstrom i steigt bis zu einem Zeitpunkt $t_1$ an, in dem sich die Ankerscheibe in Bewegung setzt. Zu einem Zeitpunkt $t_2$ schlägt die Ankerscheibe an einer Bewegungsbegrenzung wie der Sockelplatte 4 an und bleibt stehen. Zu den Zeitpunkten $t_1$ und $t_2$ weisen der dynamische Verlauf des Spulenstroms und dessen zeitliche Ableitung Unstetigkeitsstellen auf. Durch die Bewegung der Ankerscheibe zwischen den beiden Zeitpunkten $t_1$ und $t_2$ in Richtung der Spule sinkt während dieser Zeitspanne der Spulenstrom i. Nach dem Anschlagen der Ankerscheibe steigt der Spulenstrom i bis zu dem durch den Spulenwiderstand bestimmten Endwert an.

Gemäß dem ersten Ausführungsbeispiel wird zur Erzeugung des ersten Zustandssignals die bei $t_1$ bis

$t_2$ auftretende Unstetigkeitsstelle im dynamischen Verlauf des Spulenstroms i als Signal für das erfolgte Ausrücken der Bremse verwertet.

Zur Auslösung des ersten Zustandssignals muss der dynamische Verlauf des Spulenstromes zunächst einen ersten positiven Schwellenwert $i_0$ überschreiten und nachfolgend die zeitliche Ableitung des Spulenstromes einen zweiten negativen Schwellenwert $i'_1$ unterschreiten.

Außerdem muss der Augenblickswert der Spulenspannung, als weiteres mögliches Kriterium, bei der Ausgabe des ersten Zustandssignals über 0 V liegen, also positiv sein.

In der Auswertelogik kann bei Überschreiten von $i_0$ ein erster Zeiger und bei Unterschreiten von $i'_1$ ein zweiter Zeiger gesetzt werden. Sind beide Zeiger gesetzt, wird das erste Zustandssignal ausgegeben. Die Zeitpunkte, zu denen der überwachte Signalverlauf die Kriterien zur Ausgabe von $z_1$ erfüllt, sind in Fig. 3, wie auch in den nachfolgenden Figuren durch Kreise an den Schnittpunkten des jeweiligen Schwellenwertes mit den Zeitverläufen dargestellt.

Alternativ kann das erste Zustandssignal in einer einfacher gestalteten Auswertung dann ausgegeben werden, wenn nur $i'_1$ unterschritten wird. Bei dieser Variante kann auf den ersten Vergleich mit $i_0$ verzichtet werden.

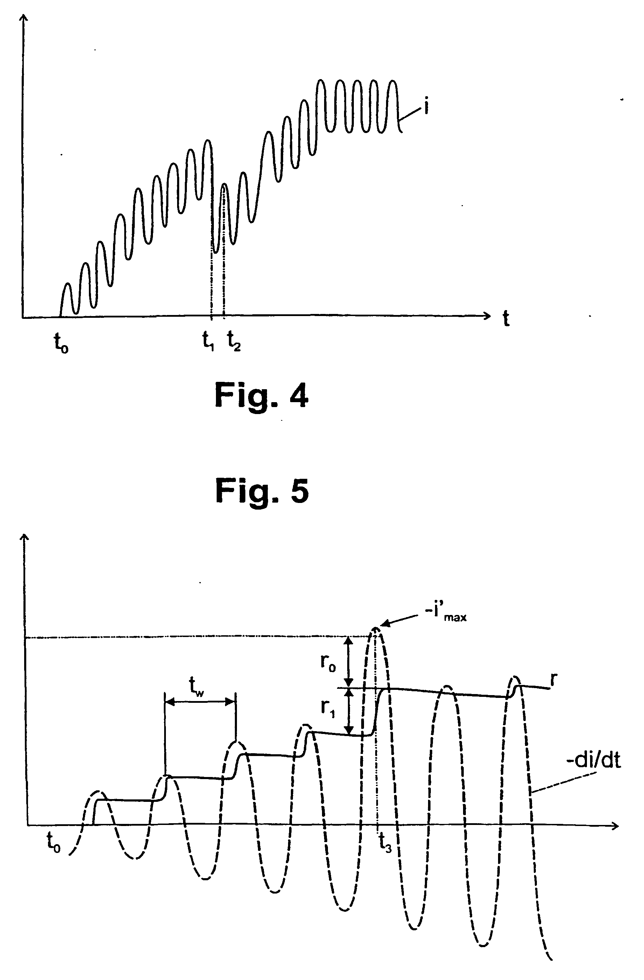

Fig. 4 zeigt schematisch den Verlauf des Spulenstroms i beim Einschaltvorgang der mit Wechselspannung mit Einweggleichrichtung betriebenen Spule. In Fig. 4 ist deutlich zu erkennen, dass der Spulenstrom einen starken im wesentlichen periodischen Wechselstromanteil aufweist. Aufgrund dieser überlagerten Störsignale ist eine Auswertung gemäß dem ersten Ausführungsbeispiel nur bei sorgfältiger Filterung der Spulenspannung und des Spulenstromes möglich, bei der weitgehend die Störanteile entfernt sind.

Gemäß einem weiteren Ausführungsbeispiel, das im Folgenden anhand der Fig. 5 erläutert ist, ist jedoch eine Auswertung des dynamischen Verlaufs der zeitlichen Ableitung des Spulenstroms möglich, ohne dass aufwendige Filteroperationen durchgeführt werden.

Fig. 5 zeigt schematisch die negative zeitliche Ableitung des Spulenstroms, -di/dt, und eine Referenzgröße r. Die zeitliche Auflösung der Fig. 5 ist größer als die der Fig. 4.
Die Referenzspannung r wird, synchronisiert mit dem Wechselstromanteil, in zeitlichen Abständen $t_w$ jeweils nach Art einer Treppenfunktion erhöht. Der Zeitpunkt des Anstiegs der Treppenfunktion ist mit den Maxima der Kurve -di/dt synchronisiert.

Zum Zeitpunkt $t_3$ der Bremse weicht das Maximum $i'_{max}$ von -di/dt um mehr als einen vorbestimmten Betrag $r_0$ von der Referenzgröße r ab. Ist diese Bedingung erfüllt, so wird das erste Zustandssignal $z_1$ ausgegeben. Der Zeitpunkt $t_3$ liegt zwischen den Zeitpunkten $t_1$ und $t_2$ der Fig. 1, also in der Bewegungsphase der Ankerscheibe.

Als ein alternatives Kriterium zum Auslösen des zweiten Zustandssignals kann auch der Anstieg $r_1$ einer Periode der Treppenfunktion verwendet werden.

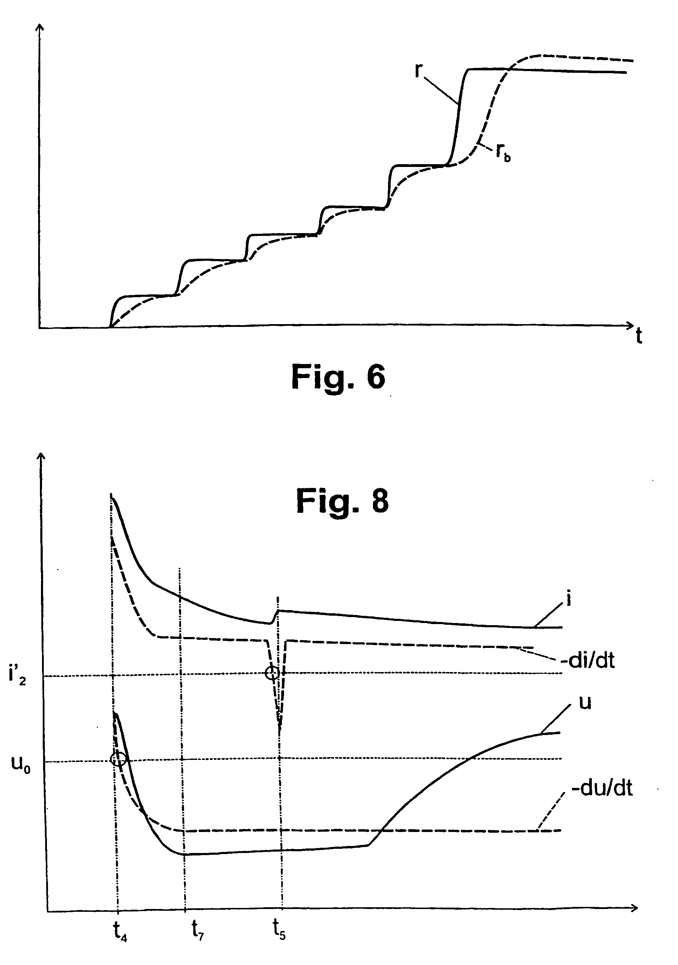

Nun wird anhand der Fig. 6 ein weiteres Ausführungsbeispiel zur Erzeugung des ersten Zustandssignals $z_1$ dargestellt, das eine vorteilhafte Weiterentwicklung des zweiten Ausführungsbeispiels darstellt.

Bei diesem Ausführungsbeispiel wird die Referenzgröße r gemäß dem vorausgegangenen Ausführungsbeispiel nochmals gemittelt, um eine zweite Referenzgröße $r_b$ zu erhalten. Die zweite Referenzgröße $r_b$ weist einen gegenüber der ersten Referenzgröße r deutlich verringerten Störabstand auf. Durch Bildung der zweiten Referenzgröße $r_b$ wird der Anstieg $r_1$ einer Periode bestimmt, indem die Differenz der Refenzgrößen r und $r_b$ gebildet wird. Das erste Zustandssignal $z_1$ wird ausgegeben, wenn das erste Referenzsignal r das zweite Referenzsignal $r_b$ um einen vorbestimmten Betrag übersteigt.

Das Verfahren unter Verwendung der Referenzfunktion kann auch für Bremsen mit Doppelweggleichrichtung verwendet werden.

Zum Einrücken der Bremse wird die Energieversorgung der Spule abgeschaltet, die Ankerscheibe bewegt sich unter dem Druck der Federn 11. Dadurch entlädt sich die in der Bremse, d. h. in der Spule und den Federn, gespeicherte Energie, so dass Bauelemente vorgesehen werden müssen, die in der Lage sind, die beim Auftrennen des Stromkreises frei werdende Energie auch bei häufigem Schalten aufzunehmen.

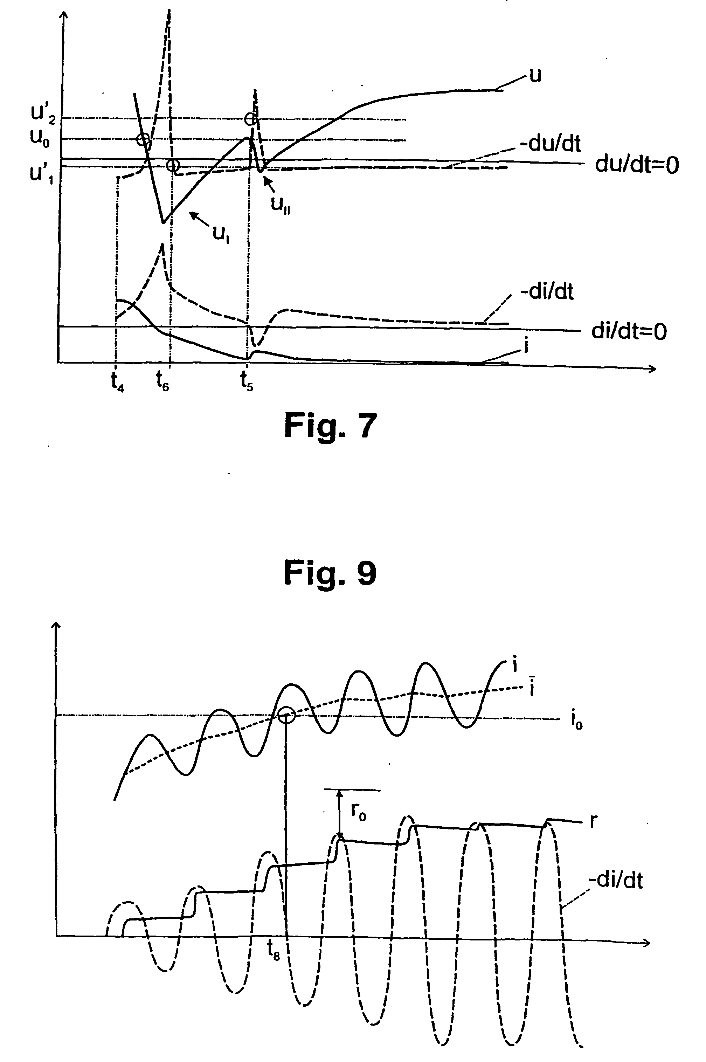

Solche Bauelemente sind beispielsweise Varistoren oder aktive Spannungsbegrenzer. Beide Bauelemente beeinflussen den dynamischen Verlauf des Spulenstromes und der Spulenspannung auf unterschiedliche Weise. Im Verfahren zur Auswertung des Verlaufs der zeitlichen Ableitung der Spulenspannung und/oder des Spulenstromes müssen diese unterschiedlichen Verläufe berücksichtigt werden. Diese Auswertealgorithmen werden im Folgenden anhand der Fig. 7 und 8 beschrieben.

Fig. 7 zeigt den dynamischen Verlauf des Spulenstroms, der Spulenspannung sowie der zeitlichen Ableitung der Spulenspannung und des Spulenstroms. Mit Bezug auf Fig. 7 wird ein Ausführungsbeispiel des erfindungsgemäßen Verfahrens erläutert, bei dem bei einer Bremsvorrichtung mit einem Varistor die Verläufe von Spulenstrom und Spulenspannung zur Ausgabe des zweiten Zustandsignals ausgewertet werden.

Der Varistor hat eine relativ weiche Spannungscharakteristik, so dass beim Abschalten des Spulenstromes zum Zeitpunkt $t_4$ eine starke negative Spannungsspitze $u_l$ auftritt. Anschließend verringert sich die Spannung aufgrund des abklingenden Stromes entsprechend der jeweiligen Charakteristik des Varistors, bis sich, zu einem Zeitpunkt $t_5$ die Ankerscheibe unter Einwirkung der Federkraft im Magnetfeld der Spule von der Spule wegbewegt. Durch die Bewegung der Ankerscheibe erhöht sich der Spulenstrom, so dass im Varistor ein erneuter Spannungsanstieg $u_{II}$ auftritt. Wenn der Bewegungsvorgang der Ankerscheibe abgeschlossen ist, klingen Strom und Spannung rasch bis auf Null ab.

Die Auswertung des dynamischen Verlaufs von Spulenstrom und Spulenspannung bei der Verwendung eines Varistors stützt sich im Wesentlichen auf das Auftreten der zwei aufeinander folgenden negativen Spannungsspitzen $u_I$ und $u_{II}$. Dabei ist die zweite Spannungsspitze $u_{II}$ repräsentativ für die Einrückbewegung der Ankerscheibe.

Als erstes Kriterium muss der Verlauf der Spulenspannung u unterhalb eines Schwellenwertes $u_0$ fallen. Ist dieses Kriterium erfüllt, so wird nach der zweiten Spannungsspitze $u_{II}$ im Verlauf der Spulenspannung gesucht.

Diese zweite Spannungsspitze wird dadurch gefunden, dass bei gleichzeitig erfüllter Bedingung $u<u_0$ im Verlauf der zeitlichen Ableitung der Spulenspannung zunächst nach der hinteren Flankenfront der ersten negativen Spannungsspitze $u_I$ und anschließend nach der vorderen Flankenfront der zweiten negativen Spannungsspitze gesucht wird. Dazu wird überprüft, ob die zeitliche Ableitung der Spulenspannung, du/dt, einen vorbestimmten Schwellenwert $u'_1$ überschreitet. In Fig. 7 ist dieser Zeitpunkt mit $t_6$ bezeichnet. Ist auch dieses Kriterium erfüllt, so wird weiter überprüft, ob nachfolgend der Verlauf der zeitlichen Ableitung der Spulenspannung, du/dt, unterhalb eines Schwellenwerts $u'_2$ sinkt und dann, bei Erfüllen dieser Bedingung, das zweite Zustandssignal $z_2$ ausgegeben.

In einer Weiterbildung der Erfindung müssen die Kriterien $u<u_0$ und du/dt>u', gleichzeitig vorliegen, damit das Kriterium $du/dt<u'_2$ im weiteren Verlauf der Spulenspannung berücksichtigt wird.

Alternativ kann das zweite Zustandssignal auch ausgegeben werden, nachdem die Spulenspannung für eine vorbestimmte Zeitspanne einen vorbestimmten positiven Schwellenwert (in Fig. 7 nicht gezeigt) überschreitet und anschließend einen zweiten, kleineren Schwellenwert unterschreitet. Durch diese Maßnahme kann beispielsweise die zwischen $u_I$ und $u_{II}$ liegende Spannungsspitze erfasst werden.

In Fig. 7 sind die Zeitpunkte, an denen die Kriterien zur Ausgabe des zweiten Zustandssignals erfüllt sind, d.h. an den Schnittpunkten der jeweils überwachten Schwellenwerte mit dem zeitlichen Verlauf des überwachten Signals, mit Kreisen gekennzeichnet. An diesen Stellen werden in der Auswertelogik Zeiger gesetzt, die das Erfüllen des Kriteriums markieren. Sollen mehrere Kriterien gleichzeitig erfüllt sein, so überprüft die Auswertelogik, ob die entsprechenden Zeiger gleichzeitig gesetzt sind. Diese Vorgehensweise findet auch in den anderen Ausführungsbeispielen Anwendung.

In Fig. 8 ist schematisch der Verlauf von Spulenstrom und Spulenspannung bei Verwendung eines aktiven Spannungsbegrenzers gezeigt.

Nachdem die Energieversorgung der Spule abgeschaltet wird, wird durch den aktiven Spannungsbegrenzer die Spulenspannung aufgrund der in der Bremse gespeicherten, nun frei werdenden Energie auf einem definierten negativen Wert in etwa konstant gehalten, bis der Spulenstrom völlig abgeklungen ist. Die Ankerscheibe setzt sich zum Zeitpunkt $t_4$ in Bewegung, was sich in einer Änderung des Verlaufs des Spulenstroms i und in einer starken Änderung seiner zeitlichen Ableitung di/dt bemerkbar macht.

Bei der Verwendung eines aktiven Spannungsbegrenzers kann man das Abfallen der Ankerscheibe am besten durch die Auswertung des Verlaufes der zeitlichen Ableitung des Spulenstromes, di/dt, erkennen.

Als Kriterium für das Vorliegen eines Abschaltvorganges wird, wie beim Ausführungsbeispiel der Fig. 7, bei der Auswertung gemäß diesem Ausführungsbeispiel die Bedingung gesetzt, dass die Spannung unterhalb eines gewissen Schwellenwertes $u_0$ sinken muss, also $u<u_0$ gilt. Der Schwellenwert $u_0$ bei Verwendung eines aktiven Spannungsbegrenzers kann sich vom Schwellenwert $u_0$ bei Verwendung eines Varistors unterscheiden. Um auch die Unterbrechung des Wechselstromkreises im Störfall zu erfassen, liegt $u_0$ bei Verwendung eines aktiven Spannungsbegrenzers bei etwa 0 V. Die Schwellenwerte können fest eingestellt oder durch die Kodiervorrichtung 15 in Abhängigkeit vom verwendeten Bremsentyp eingestellt werden.

Nach Abschalten der Energieversorgung der Spule fällt zunächst die Spannung u bis zu einem Zeitpunkt $t_7$ steil ab. Beim Unterschreiten von $u_0$ wird ein Zeiger gesetzt. Zum Zeitpunkt $t_7$ greift die aktive Spannungsbegrenzung ein und regelt die Spulenspannung auf einen in etwa konstanten negativen Wert.

Die Bewegung der Ankerscheibe wird durch die Überwachung des Verlaufes der zeitlichen Ableitung des Spulenstromes, di/dt, festgestellt, wenn $u_0$ unterschritten wurde.

Wie in der Fig. 8 zu erkennen ist, tritt zum Zeitpunkt $t_5$ der Bewegung der Ankerscheibe eine positive Spitze in der zeitlichen Ableitung des Spulenstromes auf, während die Spulenspannung und die zeitliche Ableitung der Spulenspannung nahezu konstant verlaufen.

Das zweite Zustandssignal wird ausgegeben, wenn $u < u_0$ und $di/dt < i'_2$ gilt.

Auch in Fig. 8 sind die Zeitpunkte, zu denen die Kriterien zur Ausgabe des zweiten Zustandssignals erfüllt sind, mit Kreisen versehen.

Die beim Erfüllen der Kriterien gesetzten Zeiger werden zurückgesetzt, wenn das entsprechende Zustandssignal ausgegeben wurde, oder wenn ein vorbestimmter Zeitablauf ohne Ausgabe des Zustandssignals verstrichen ist. Zusätzlich können die Zeiger zur Überwachung des einen Betriebszustandes (z.B. des Einrückens der Kupplung) zurückgesetzt werden, wenn der jeweils andere, komplementäre Betriebszustand erfasst wird (z.B. die Bremse ausrückt). Als ein weiteres Kriterium zum Zurücksetzen der Zeiger kann das Absinken des Spulenstromes auf einen Wert nahe 0 A verwendet werden.

In einer Zusammenschau der Ausführungsbeispiele, wie sie anhand der Fig. 7 und 8 erläutert wurden, kann das Verfahren zur Ausgabe des zweiten Zustandssignals mit folgenden Auswerteschritten sowohl für Bremsen mit aktiver Spannungsbegrenzung als auch für Bremsen mit Varistoren verwendet werden: Zunächst wird überprüft, ob die Spulenspannung den Schwellenwert $u_0$ unterschritten hat und die Ableitung des Spulenstromes nicht negativ ist. Sind diese beiden Kriterien erfüllt, wird überprüft, ob entweder die Ableitung des Spulenstromes den positiven Schwellenwert $i'_2$ überschreitet oder die Ableitung der Spulenspannung den negativen Schwellenwert $u'_2$ unterschreitet.

Die beiden letzten Kriterien können in einer Weiterbildung auch zusammengefasst werden, indem von der zeitlichen Ableitung des Spulenstroms der Wert der zeitlichen Ableitung der Spulenspannung abgezogen und dann überprüft wird, ob die Differenz einen vorbestimmten positiven Schwellenwert überschreitet. Bei Überschreiten dieses Schwellenwertes wird das zweite Zustandssignal $z_2$ ausgegeben. Diese Verfahrensvariante ist sowohl bei Bremsen mit Varistoren als auch bei Bremsen mit aktiven Spannungsbegrenzern einsetzbar.

Anhand der Fig. 9 wird nun das Verfahren zur Ausgabe eines dritten Zustandsignals $z_3$, das den Zustand eines übergroßen Luftspaltes in der Bremse repräsentiert, erläutert. In Fig. 9 ist schematisch der Verlauf des Spulenstroms i, dessen negative zeitliche Ableitung -di/dt, ein die Ableitung repräsentierendes Referenzsignal und der von der Überwachungseinrichtung gebildete Mittelwert des Spulenstromes i zeigt.

Bei dem erfindungsgemäßen Verfahren wird dies wie folgt festgestellt:

Ist der Luftspalt der Bremse zu groß, so wird ein vorbestimmter, über die Kodiervorrichtung 15 einstellbarer Anzugsstrom $i_0$, bei dem die Bremse bei normalem Luftspalt ausrücken würde, überschritten, ohne dass ein Ausrückvorgang stattfindet.

Der zeitliche Verlauf der Ableitung des Spulenstroms wird durch eine Treppenfunktion r, wie im Ausführungsbeispiel der Fig. 5 oder 6 beschrieben, angenähert. Gemäß diesem Ausführungsbeispiel wird die Bewegung der Ankerscheibe dadurch erkannt, dass es einen Minimalwert von di/dt gibt, der in mehr als einem vorbestimmten Schwellenwert $r_0$ von der Referenzgröße r abweicht.

Findet aufgrund des übergroßen Luftspaltes eine Bewegung der Ankerscheibe nicht oder erst bei einem Strom statt, der größer als ein vorbestimmter Schwellenwert $i_0$ ist, so wird das dritte Zustandssignal $z_3$ ausgegeben.

Wie in Fig. 9 zu erkennen ist, überschreitet der gemittelte Sputenstrom $\bar{i}$ zum Zeitpunkt $t_8$ den Anzugsstrom $i_0$, ohne dass bis zu diesem Zeitpunkt der Schwellenwert $r_0$ von der Treppenfunktion überschritten wurde. Dies dient der Überwachungseinrichtung als Kriterium zur Ausgabe des dritten Zustandssignals $z_3$.

## Patentansprüche

1. Verfahren zum Überwachen des Betriebszustandes einer Bremse, bei dem die Bremse bei Änderung des Spulenstromes elektromagnetisch ein- und/oder ausgerückt und wenigstens ein den Betriebszustand der Bremse repräsentierendes Zustandssignal ausgegeben wird, **dadurch gekennzeichnet, dass** das Zustandssignal in Abhängigkeit vom Zeitverlauf der zeitlichen Ableitung des Spulenstroms ausgegeben wird, und dass zur Auswertung der zeitlichen Ableitung des Spulenstroms wenigstens annähernde Referenzgröße gebildet wird.

2. Verfahren nach Anspruch 1, **dadurch gekennzeichnet, dass** ein erstes, den ausgerückten Zustand der Bremse repräsentierendes Zustandssignal ausgegeben wird, wenn nach dem Einschalten der Energiezufuhr durch die Überwachungseinrichtung wenigstens eine Unstetigkeitsstelle im Verlauf des Spulenstroms erfasst worden ist.

3. Verfahren nach Anspruch 1, **dadurch gekennzeichnet, dass** die Referenzgröße durch Annähern einer treppenförmigen Funktion (r, $r_b$) an die zeitliche Ableitung des Spulenstromes gebildet wird.

4. Verfahren nach Anspruch 3, **dadurch gekennzeichnet, dass** die Treppenfunktion mit einem den Spulenstrom oder die Spulenspannung überlagernden Wechselanteil synchronisiert wird.

5. Verfahren nach Anspruch 3 oder 4, **dadurch gekennzeichnet, dass** die Treppenfunktion in etwa auf den jeweiligen positiven oder negativen Maximalwert der zeitlichen Ableitung innerhalb der Wechselstromperiode ansteigt.

6. Verfahren nach einem der oben genannten Ansprüche, **dadurch gekennzeichnet, dass** eine zweite, die zeitliche Ableitung des Spulenstroms repräsentierende Referenzgröße ($r_b$) aus der ersten Referenzgröße im wesentlichen durch Mittelung gebildet wird.

7. Verfahren nach einem der oben genannten Ansprüche, **dadurch gekennzeichnet, dass** das erste Zustandssignal ausgegeben wird, wenn sich die Treppenfunktion zwischen zwei Anstiegen um mehr als einen vorbestimmten Betrag ($r_1$) ändert.

**8.** Verfahren nach einem der oben genannten Ansprüche, **dadurch gekennzeichnet, dass** das erste Zustandssignal ausgegeben wird, wenn die durch die Treppenfunktion angenäherte Größe um mehr als einen vorbestimmten Betrag von der Treppenfunktion ($r_0$) abweicht.

**9.** Verfahren nach einem der oben genannten Ansprüche, **dadurch gekennzeichnet, dass** als weiteres Kriterium für die Ausgabe des ersten Zustandssignals der Augenblickswert der Spulenspannung positiv ist.

**10.** Verfahren nach einem der oben genannten Ansprüche, **dadurch gekennzeichnet, dass** die Spulenspannung und/oder der Spulenstrom und/oder die zeitliche Ableitung des Spulenstroms und/oder die Referenzgröße bandpassgefiltert werden.

**11.** Verfahren nach einem der oben genannten Ansprüche, **dadurch gekennzeichnet, dass** das erste Zustandssignal ($z_1$) ausgegeben wird, wenn der dynamische Verlauf des Spulenstroms einen vorbestimmten Schwellenwert ($i_0$) überschreitet.

**12.** Verfahren nach einem der oben genannten Ansprüche, **dadurch gekennzeichnet, dass** das erste Zustandssignal ($z_1$) ausgegeben wird, wenn die zeitliche Ableitung des Spulenstromes einen vorbestimmten Schwellenwert ($i'_1$) unterschreitet.

**13.** Verfahren nach einem der oben genannten Ansprüche, **dadurch gekennzeichnet, dass** ein zweites, den eingerückten Zustand der Bremse repräsentierendes Zustandssignal ($z_2$) ausgegeben wird, wenn nach dem Unterbrechen der Energiezufuhr die negative Spulenspannung unter einem vorbestimmten Schwellenwert und der Spulenstrom über einem vorbestimmten Schwellenwert liegen.

**14.** Verfahren nach einem der oben genannten Ansprüche, **dadurch gekennzeichnet, dass** nach dem Abschalten des Spulenstromes zwei aufeinander folgende negative Spannungsspitzen ($u_I$, $u_{II}$) in der Spulenspannung erfasst und zur Erzeugung des zweiten Zustandssignals ($z_2$) ausgewertet werden.

**15.** Verfahren nach einem der oben genannten Ansprüche, **dadurch gekennzeichnet, dass** zur Ausgabe des zweiten Zustandssignals ($z_2$) nach dem Abschalten des Spulenstromes der Verlauf der Spulenspannung und die zeitliche Ableitung der Spulenspannung überwacht werden.

**16.** Verfahren nach Anspruch 15, **dadurch gekennzeichnet, dass** das zweite Zustandssignal ($z_2$) ausgegeben wird, wenn die Spulenspannung einen vorbestimmten negativen Schwellenwert ($u_0$) unterschreitet.

**17.** Verfahren nach Anspruch 15 oder 16, **dadurch gekennzeichnet, dass** das zweite Zustandssignal ($z_2$) ausgegeben wird, wenn die zeitliche Ableitung der Spulenspannung einen vorbestimmten positiven Schwellenwert ($u'_1$) überschreitet.

**18.** Verfahren nach einem der Ansprüche 15 bis 17, **dadurch gekennzeichnet, dass** das zweite Zustandssignal ($z_2$) ausgegeben wird, wenn die zeitliche Ableitung der Spulenspannung unterhalb eines vorbestimmten negativen Schwellenwertes ($u'_2$) sinkt.

**19.** Verfahren nach Anspruch 18, **dadurch gekennzeichnet, dass** das zweite Zustandssignat ($z_2$) ausgegeben wird, wenn die zeitliche Ableitung der Spulenspannung unterhalb eines vorbestimmten negativen Schwellenwertes ($u'_2$) sinkt, nachdem die Spulenspannung ($u$) den vorbestimmten Schwelleriwert ($u_0$) unterschritten und/oder die zeitliche Ableitung der Spulenspannung ($du/dt$) den vorbestimmten positiven Schwellenwertes ($u'_1$) überschritten hat.

**20.** Verfahren nach einem der oben genannten Ansprüche, **dadurch gekennzeichnet, dass** das zweite Zustandssignal ausgegeben wird, wenn nach dem Abschalten des Spulenstromes die Spulenspannung unterhalb eines vorbestimmten Schwellenwertes verläuft und die zeitliche Ableitung des Spulenstromes einen vorbestimmten positiven Schwellenwert überschreitet.

**21.** Verfahren nach Anspruch 20, **dadurch gekennzeichnet, dass** der Schwellenwert für die Spulenspannung auf einen Wert nahe 0 Volt festgelegt wird.

**22.** Verfahren nach einem der oben genannten Ansprüche, **dadurch gekennzeichnet, dass** das zweite Zustandssignal ausgegeben wird, wenn die zeitliche Ableitung der Spulenspannung unterhalb eines vorbestimmten negativen Schwellenwertes ($u'_1$) liegt.

**23.** Verfahren nach Anspruch 20, **dadurch gekennzeichnet, dass** das zweite Zustandssignal ausgegeben wird, wenn die zeitliche Ableitung des Spulenstroms oberhalb eines vorbestimmten Schwellenwertes ($i'_2$) liegt.

**24.** Verfahren nach einem der Ansprüche 23 oder 24, **dadurch gekennzeichnet, dass** das zweite Zustandssignal ausgegeben wird, wenn die Differenz eines die zeitliche Ableitung des Spulenstroms und eines die zeitliche Ableitung der Spulenspannung repräsentierenden Signals einen vorbestimmten Schwellenwert überschreitet.

25. Verfahren nach einem der oben genannten Ansprüche, **dadurch gekennzeichnet, dass** das zweite Zustandssignal nicht ausgegeben wird, wenn die Spulenspannung positiv und/oder die Ableitung des Spulenstroms negativ ist

26. Verfahren nach einem der oben genannten Ansprüche, **dadurch gekennzeichnet, dass** zur Auswertung des dynamischen Verlaufs des Spulenstroms ein zeitlicher Mittelwert $(\bar{i})$ des Spulenstromes $(i)$ durch die Überwachungseinrichtung gebildet wird.

27. Verfahren nach einem der oben genannten Ansprüche, **dadurch gekennzeichnet, dass** das zweite Zustandssignal ausgegeben wird, nachdem die Spulenspannung für eine vorbestimmte Zeitspanne einen vorbestimmten Spannungswert überschritten und anschließend einen zweiten, kleineren Spannungswert unterschritten hat.

28. Verfahren nach einem der oben genannten Ansprüche, **dadurch gekennzeichnet, dass** zur Erzeugung des dritten Zustandssignals der Spulenstrom beim Einschalten überwacht und das zweite Zustandssignal erzeugt wird, wenn der Spulenstrom einen vorbestimmten Schwellenwert überschreitet.

29. Verfahren nach einem der oben genannten Ansprüche, **dadurch gekennzeichnet, dass** durch die Überwachungsvorrichtung wenigstens ein Schwellenwert in Abhängigkeit von einem durch eine Kodiervorrichtung (15) ausgegebenen Kodiersignal passend zum Bremsentyp eingestellt wird.

30. Bremsenüberwachungsvorrichtung (3), wobei die Bremsenüberwachungsvorrichtung (3) im Betrieb über einer Versorgungsleitung (6) mit einer Spule (5) einer Bremse (1) elektrisch verbindbar ist und eine Auswerteeinheit (20) aufweist, über die wenigstens ein den Betriebszustand der Bremse repräsentierendes Zustandssignal $(z_1, z_2, z_3)$ ausgebbar ist, **dadurch gekennzeichnet, dass** die Bremsenübennrachungsvorrichtung (3) eine mit der Auswerteeinheit (20) verbundene Berechnungseinheit (21, 25) aufweist, durch die im Betrieb eine die zeitliche Ableitung des Spulenstroms (i) wenigstens annähernde Refernzgröße (r, rb) erzeugt und an die Auswerteeinheit geleitet ist.

31. Bremsvorrichtung (1) mit einer Bremse (2), die eine Spule (5) zur Erzeugung eines Magnetfeldes und eine durch das Magnetfeld bewegliche Ankerscheibe aufweist, **dadurch gekennzeichnet, dass** die Bremsvorrichtung eine Überwachungsvorrichtung (3) nach Anspruch 30 aufweist.

32. Bremsvorrichtung nach Anspruch 31, **dadurch gekennzeichnet, dass** die Überwachungsvorrichtung (3) außerhalb der Bremse angeordnet ist

## Claims

1. Method for monitoring the operating state of a brake in which on changing the coil current the brake is electromagnetically engaged and/or disengaged and at least one status signal representing the operating state of the brake is output, **characterised in that** the status signal is output as a function of the variation over time of the derivative with respect to time of the coil current and that for evaluating the derivative with respect to time of the coil current an at least approximate reference variable is generated.

2. Method according to claim 1, **characterised in that** a first status signal representing the disengaged state of the brake is output when after switching on the energy supply at least one point of discontinuity in the variation of the coil current has been detected by the monitoring device.

3. Method according to claim 1, **characterised in that** the reference variable is generated by approximation of a stepped function $(r, r_b)$ to the derivative with respect to time of the coil current.

4. Method according to claim 3, **characterised in that** the stepped function is synchronised with an alternating component superimposed on the coil current or the coil voltage.

5. Method according to claim 3 or 4, **characterised in that** the stepped function rises approximately to the respective positive or negative maximum value of the derivative with respect to time within the alternating current cycle.

6. Method according to one of the preceding claims, **characterised in that** a second reference variable $(r_b)$ representing the derivative with respect to time of the coil current is generated from the first reference variable substantially by averaging.

7. Method according to one of the preceding claims, **characterised in that** the first status signal is output when the stepped function changes between two rises by more than a predetermined amount $(r_1)$.

8. Method according to one of the preceding claims, **characterised in that** the first status signal is output when the variable approximated by the stepped function differs from the stepped function $(r_0)$ by

more than a predetermined amount.

9. Method according to one of the preceding claims, **characterised in that** as a further criterion of the output of the first status signal the instantaneous value of the coil voltage is positive.

10. Method according to one of the preceding claims, **characterised in that** the coil voltage and/or the coil current and/or the derivative with respect to time of the coil current and/or the reference variable are bandpass-filtered.

11. Method according to one of the preceding claims, **characterised in that** the first status signal ($z_1$) is output when the dynamic variation of the coil current exceeds a predetermined threshold value ($i_0$).

12. Method according to one of the preceding claims, **characterised in that** the first status signal ($z_1$) is output when the derivative with respect to time of the coil current falls below a predetermined threshold value ($i'_1$).

13. Method according to one of the preceding claims, **characterised in that** a second status signal ($z_2$) representing the engaged state of the brake is output when after interrupting the energy supply the negative coil voltage is below a predetermined threshold value and the coil current is above a predetermined threshold value.

14. Method according to one of the preceding claims, **characterised in that** after switching off the coil current two successive negative voltage peaks ($u_I$, $u_{II}$) in the coil voltage are detected and evaluated to generate the second status signal ($z_2$).

15. Method according to one of the preceding claims, **characterised in that** for the output of the second status signal ($z_2$) after the coil current has been switched off the variation of the coil voltage and the derivative with respect to time of the coil voltage are monitored.

16. Method according to claim 15, **characterised in that** the second status signal ($z_2$) is output when the coil voltage falls below a predetermined negative threshold value ($u_0$).

17. Method according to claim 15 or 16, **characterised in that** the second status signal ($z_2$) is output when the derivative with respect to time of the coil voltage exceeds a predetermined positive threshold value ($u'_1$).

18. Method according to one of claims 15 to 17, **characterised in that** the second status signal ($z_2$) is output when the derivative with respect to time of the coil voltage falls below a predetermined negative threshold value ($u'_2$).

19. Method according to claim 18, **characterised in that** the second status signal ($z_2$) is output when the derivative with respect to time of the coil voltage falls below a predetermined negative threshold value ($u_2$) after the coil voltage (u) has fallen below the predetermined threshold value ($u_0$) and/or the derivative with respect to time of the coil voltage (du/dt) has exceeded the predetermined positive threshold value ($u'_1$).

20. Method according to one of the preceding claims, **characterised in that** the second status signal is output when after the coil current has been switched off the coil voltage runs below a predetermined threshold value and the derivative with respect to time of the coil current exceeds a predetermined positive threshold value.

21. Method according to claim 20, **characterised in that** the threshold value for the coil voltage is set at a value close to 0 volts.

22. Method according to one of the preceding claims, **characterised in that** the second status signal is output when the derivative with respect to time of the coil voltage is below a predetermined negative threshold value ($u'_1$).

23. Method according to claim 20, **characterised in that** the second status signal is output when the derivative with respect to time of the coil current is above a predetermined threshold value ($i'_2$).

24. Method according to one of claims 23 or 24, **characterised in that** the second status signal is output when the difference between a signal representing the derivative with respect to time of the coil current and a signal representing the derivative with respect to time of the coil voltage exceeds a predetermined threshold value.

25. Method according to one of the preceding claims, **characterised in that** the second status signal is not output when the coil voltage is positive and/or the derivative of the coil current is negative.

26. Method according to one of the preceding claims, **characterised in that** for evaluating the dynamic variation of the coil current a mean value ($\bar{i}$) over time of the coil current (i) is generated by the monitoring device.

27. Method according to one of the preceding claims, **characterised in that** the second status signal is output after the coil voltage has exceeded a predetermined voltage value for a predetermined length of time and then has fallen below a second, smaller voltage value.

28. Method according to one of the preceding claims, **characterised in that** for generating the third status signal the coil current when switched on is monitored and the second status signal is generated when the coil current exceeds a predetermined threshold value.

29. Method according to one of the preceding claims, **characterised in that** by means of the monitoring device at least one threshold value is set as a function of a coding signal matching the brake type output by an encoding device (15).

30. Brake monitoring device (3), wherein the brake monitoring device (3) in operation is electrically connectable via a supply lead (6) to a coil (5) of a brake (1) and has an evaluation unit (20) through which at least one status signal ($z_1$, $z_2$, $z_3$) representing the operating state of the brake is outputable, **characterised in that** the brake monitoring device (3) possesses a calculating unit (21, 25) connected to the evaluation unit (20) by means of which in operation a reference variable (r, rb) at least approximating the derivative with respect to time of the coil current (i) is generated and passed on to the evaluation unit.

31. Brake device (1) having a brake (2) which possesses a coil (5) for generating a magnetic field and an armature disk which is movable through the magnetic field, **characterised in that** the brake device comprises a monitoring device (3) according to claim 30.

32. Brake device according to claim 31, **characterised in that** the monitoring device (3) is arranged outside the brake.

**Revendications**

1. Procédé pour surveiller l'état de fonctionnement d'un frein, selon lequel le frein est rentré et/ou sorti par voie électromagnétique lors d'une variation du courant de bobine et au moins un signal d'état représentant l'état de fonctionnement du frein est émis, **caractérisé en ce que** le signal d'état est émis en fonction de la courbe dans le temps de la dérivée par rapport au temps du courant de bobine, et **en ce que** pour évaluer la dérivée par rapport au temps du courant de bobine, une grandeur de référence au moins approximative est formée.

2. Procédé selon la revendication 1, **caractérisé en ce qu'**un premier signal d'état représentant l'état sorti du frein est émis si, après la mise en marche de l'amenée d'énergie, au moins un point de discontinuité a été détecté par le dispositif de surveillance sur la courbe du courant de bobine.

3. Procédé selon la revendication 1, **caractérisé en ce que** la grandeur de référence est formée grâce à une approximation d'une fonction en escalier (r, $r_b$) par rapport à la dérivée par rapport au temps du courant de bobine.

4. Procédé selon la revendication 3, **caractérisé en ce que** la fonction en escalier est synchronisée avec une composante alternative couvrant le courant de bobine ou la tension de bobine.

5. Procédé selon la revendication 3 ou 4, **caractérisé en ce que** la fonction en escalier monte à peu près jusqu'à la valeur maximale positive ou négative de la dérivée par rapport au temps à l'intérieur de la période de courant alternatif.

6. Procédé selon l'une des revendications précédentes, **caractérisé en ce qu'**une deuxième grandeur de référence ($r_b$) représentant la dérivée par rapport au temps du courant de bobine est formée à partir de la première grandeur de référence essentiellement grâce à la formation d'une moyenne.

7. Procédé selon l'une des revendications précédentes, **caractérisé en ce que** le premier signal d'état est émis si la fonction en escalier subit une variation supérieure à une valeur prédéfinie ($r_1$), entre deux augmentations.

8. Procédé selon l'une des revendications précédentes, **caractérisé en ce que** le premier signal d'état est émis si la grandeur approchée par la fonction en escalier ($r_0$) présente par rapport à celle-ci une différence supérieure à une valeur prédéfinie.

9. Procédé selon l'une des revendications précédentes, **caractérisé en ce qu'**un autre critère pour l'émission du premier signal d'état est que la valeur instantanée de la tension de bobine soit positive.

10. Procédé selon l'une des revendications précédentes, **caractérisé en ce que** la tension de bobine et/ou le courant de bobine et/ou la dérivée par rapport au temps du courant de bobine et/ou la grandeur de référence subissent un filtrage de passe-bande.

11. Procédé selon l'une des revendications précédentes, **caractérisé en ce que** le premier signal d'état ($z_1$) est émis si la courbe dynamique du courant de bobine dépasse une valeur seuil ($i_0$) prédéfinie.

**12.** Procédé selon l'une des revendications précédentes, **caractérisé en ce que** le premier signal d'état ($z_1$) est émis si la dérivée par rapport au temps du courant de bobine devient inférieure à une valeur seuil ($i'_1$) prédéfinie.

**13.** Procédé selon l'une des revendications précédentes, **caractérisé en ce qu'**un deuxième signal d'état ($z_2$) représentant l'état rentré du frein est émis si, après l'interruption de l'amenée d'énergie, la tension de bobine négative est inférieure à une valeur seuil prédéfinie et si le courant de bobine est supérieur à une valeur seuil prédéfinie.

**14.** Procédé selon l'une des revendications précédentes, **caractérisé en ce qu'**après l'arrêt du courant de bobine, deux pointes de tension négatives successives ($u_I$, $u_{II}$) sont détectées dans la tension de bobine et sont évaluées pour produire le deuxième signal d'état ($z_2$).

**15.** Procédé selon l'une des revendications précédentes, **caractérisé en ce que** pour l'émission du deuxième signal d'état ($z_2$) après l'arrêt du courant de bobine la courbe de la tension de bobine et sa dérivée par rapport au temps sont surveillées.

**16.** Procédé selon la revendication 15, **caractérisé en ce que** le deuxième signal d'état ($z_2$) est émis si la tension de bobine devient inférieure à une valeur seuil négative ($u_0$) prédéfinie.

**17.** Procédé selon la revendication 15 ou 16, **caractérisé en ce que** le deuxième signal d'état ($z_2$) est émis si la dérivée par rapport au temps de la tension de bobine dépasse une valeur seuil positive ($u'_1$) prédéfinie.

**18.** Procédé selon l'une des revendications 15 à 17, **caractérisé en ce que** le deuxième signal d'état ($z_2$) est émis si la dérivée par rapport au temps de la tension de bobine descend jusqu'à une valeur inférieure à une valeur seuil négative ($u'_2$) prédéfinie.

**19.** Procédé selon la revendication 18, **caractérisé en ce que** le deuxième signal d'état ($z_2$) est émis si la dérivée par rapport au temps de la tension de bobine descend jusqu'à une valeur inférieure à une valeur seuil négative ($u'_2$) prédéfinie, après que la tension de bobine ($u$) est devenue inférieure à la valeur seuil ($u_0$) prédéfinie et/ou la dérivée par rapport au temps de la tension de bobine ($du/dt$) a dépassé la valeur seuil positive ($u'_1$) prédéfinie.

**20.** Procédé selon l'une des revendications précédentes, **caractérisé en ce que** le deuxième signal d'état est émis si après l'arrêt du courant de bobine, la tension de bobine est inférieure à une valeur seuil prédéfinie et si la dérivée par rapport au temps du courant de bobine dépasse une valeur seuil positive prédéfinie.

**21.** Procédé selon la revendication 20, **caractérisé en ce que** la valeur seuil pour la tension de bobine est fixée à une valeur proche de 0 volt.

**22.** Procédé selon l'une des revendications précédentes, **caractérisé en ce que** le deuxième signal d'état est émis si la dérivée par rapport au temps de la tension de bobine est inférieure à une valeur seuil négative ($u'_1$) prédéfinie.

**23.** Procédé selon la revendication 20, **caractérisé en ce que** le deuxième signal d'état est émis si la dérivée par rapport au temps du courant de bobine est supérieure à une valeur seuil ($i'_2$) prédéfinie.

**24.** Procédé selon la revendication 23 ou 24, **caractérisé en ce que** le deuxième signal d'état est émis si la différence entre un signal représentant la dérivée par rapport au temps du courant de bobine et un signal représentant la dérivée par rapport au temps de la tension de bobine dépasse une valeur seuil prédéfinie.

**25.** Procédé selon l'une des revendications précédentes, **caractérisé en ce que** le deuxième signal d'état n'est pas émis si la tension de bobine est positive et/ou si la dérivée du courant de bobine est négative.

**26.** Procédé selon l'une des revendications précédentes, **caractérisé en ce que** pour évaluer la courbe dynamique du courant de bobine, une valeur moyenne dans le temps ($\bar{i}$) du courant de bobine ($i$) est formée par le dispositif de surveillance.

**27.** Procédé selon l'une des revendications précédentes, **caractérisé en ce que** le deuxième signal d'état est émis après que la tension de bobine a dépassé après un laps de temps prédéfini une valeur de tension prédéfinie et est ensuite devenue inférieure à une deuxième valeur de tension, plus petite.

**28.** Procédé selon l'une des revendications précédentes, **caractérisé en ce que** pour produire le troisième signal d'état, le courant de bobine est surveillé lors de la mise en marche et le deuxième signal d'état est produit si le courant de bobine dépasse une valeur seuil prédéfinie.

**29.** Procédé selon l'une des revendications précédentes, **caractérisé en ce que** grâce au dispositif de surveillance, au moins une valeur seuil est réglée d'une manière appropriée pour le type de frein, en fonction d'un signal de codage émis par un dispositif de codage (15).

**30.** Dispositif de surveillance de frein (3) qui est apte à être relié par voie électrique, en fonctionnement, à une bobine (5) d'un frein (1) par l'intermédiaire d'une ligne d'alimentation (6) et qui comporte une unité d'évaluation (20) grâce à laquelle au moins un signal d'état ($z_1$, $z_2$, $z_3$) représentant l'état de fonctionnement du frein peut être émis, **caractérisé en ce qu'**il comporte une unité de calcul (21, 25) qui est reliée à l'unité d'évaluation (20) et grâce à laquelle, en fonctionnement, une grandeur de référence (r, rb) approchant au moins de la dérivée par rapport au temps du courant de bobine (i) est produite et est transmise à l'unité d'évaluation.

**31.** Dispositif de freinage (1) avec un frein (2) qui comporte une bobine (5) pour produire un champ magnétique et une plaque d'induit mobile grâce au champ magnétique, **caractérisé en ce qu'**il comporte un dispositif de surveillance (3) selon la revendication 30.

**32.** Dispositif de freinage selon la revendication 31, **caractérisé en ce que** le dispositif de surveillance (3) est disposé en dehors du frein.

**Fig. 1**

# Fig. 2

Alternative

Fig. 3

Fig. 4

Fig. 5

Fig. 6

Fig. 8

**Fig. 7**

**Fig. 9**